# EUROPÄISCHE PATENTSCHRIFT

(11) **EP 1 627 904 B1**
(45) Veröffentlichungstag und Bekanntmachung des Hinweises auf die Patenterteilung: **25.04.2007**
(21) Anmeldenummer: 05016988.7
(22) Anmeldetag: 04.08.2005
(51) Int. Cl.: C09K 11/77

(54) **Leuchtstoffzusammensetzung für Lampen**
Phosphor composition for lamps
Composition de luminophore pour lampes

(30) Priorität: 20.08.2004 DE 102004040686
(43) Veröffentlichungstag der Anmeldung: 22.02.2006
(73) Patentinhaber: Patent-Treuhand-Gesellschaft für elektrische Glühlampen mbH, 81543 München (DE)
(72) Erfinder: Fiedler, Tim, 81377 München (DE); Huber, Günter, 86529 Schrobenhausen (DE); Müller, Ulrich, 81479 München (DE); Zachau, Martin, Dr., 82269 Geltendorf (DE)

(56) Entgegenhaltungen:
- US-A- 4 423 349
- WULED LENGGORO I ET AL: "Synthesis of LaPO4:Ce,Tb phosphor particles by spray pyrolysis" MATERIALS LETTERS, NORTH HOLLAND PUBLISHING COMPANY. AMSTERDAM, NL, Bd. 50, Nr. 2-3, August 2001 (2001-08), Seiten 92-96, XP004300632 ISSN: 0167-577X

## Beschreibung

### Technisches Gebiet

Die Erfindung geht aus von einer Leuchtstoffzusammensetzung für Lampen mit einem Gitter in monokliner Kristallstruktur (Monazit) vom Typ LnPO₄:Ce,A wobei Ln zumindest ein Element aus der Gruppe Lanthan La, Gadolinium Gd und/oder Yttrium Y und A zumindest ein Aktivator aus der Gruppe Terbium Tb, Praseodym Pr und/oder Europium Eu ist.

### Stand der Technik

Der Leuchtstoff LaPO₄:Ce,Tb ist als sehr effiziente Grünkomponente in Dreibanden-Leuchtstofflampen weit verbreitet. Um sowohl das Aktivator-Ion Tb als auch das Koaktivator-Ion Cer Ce in dem gewünschten dreiwertigen Zustand zu erhalten, erfolgt die Leuchtstoffherstellung üblicherweise durch Glühung eines geeigneten Precursors oder einer geeigneten Ansatzmischung in einer leicht reduzierenden Schutzgasatmosphäre. Der so gewonnene Leuchtstoff ist an sich bis zu einer Temperatur von mehr als ca. 200°C an Luft sehr stabil, d.h. er zeigt keine signifikante Abnahme der Lumineszenzintensität bei einer Temperatursteigerung innerhalb dieses Temperaturbereichs. Führt man jedoch eine thermische Behandlung an Luft bei deutlich höheren Temperaturen von größer ca. 400°C durch, wie es beispielsweise während des Leuchtstofflampenbaus beim Ausheizen der Leuchtstoffschichten unumgänglich ist, erfährt der Leuchtstoff LaPO₄:Ce,Tb nicht nur eine Abnahme seiner ursprünglichen Quantenausbeute, sondern er erwirbt gleichzeitig auch ein sog. Temperaturlöschverhalten, d.h. die Lumineszenzintensität nimmt bei Temperatursteigerungen auch bereits deutlich unterhalb von ca. 200°C in reversibler Weise ab.

Die Schädigung von LaPO₄:Ce,Tb durch Erhitzung auf größer 400°C an Luft wird mit einer Teiloxidation des Koaktivators Ce vom dreiwertigen zum vierwertigen Zustand erklärt. Diese Oxidation ist nur unter Mitwirkung von Anionen-Leerstellen im Wirtsgitter möglich (M.V. Hoffmann: J. Electrochem. Soc. 118, 1508 (1971)). Es ist daher bekannt, dass sich durch eine möglichst perfekte Kristallgitter-Ausbildung mit wenigen Leerstellen, die man durch eine optimierte Prozessführung zu erreichen strebt, und/oder durch Verringerung der Koaktivator-Konzentration eine Temperaturschädigung an Luft vermindern lässt. Nachteilig bei der letzteren Maßnahme ist jedoch, dass mit einer Reduzierung des Ce-Gehalts eine Abnahme der Absorptionsfähigkeit für die anregende UV-Strahlung verbunden ist, so dass der Ce-Anteil nicht beliebig abgesenkt werden kann. Es ist weiterhin bekannt, dass durch Teilsubstitution von dreiwertigen Ce-Ionen durch vierwertige Thorium-Ionen Anion-Leerstellen blockiert werden und die Oxidation von Ce dadurch verhindert werden kann. Wegen der Radioaktivität natürlichen Thoriums wird eine derartige Lösung in der Praxis jedoch ausgeschlossen.

### Darstellung der Erfindung

Die Aufgabe der vorliegenden Erfindung ist es, die oben aufgeführten Nachteile zu verbessern.

Diese Aufgabe wird gelöst durch eine zumindest teilweise Substitution der Ce-Ionen durch Germanium Ge-Ionen, wobei dann eine Leuchtstoffzusammensetzung mit einem Gitter in monokliner Kristallstruktur (Monazit) vom Typ (1-g)[((1-c-a)*Ln,c*Ce,a*A)PO₄] x g*GeO₂ geschaffen wird. Ln ist dabei zumindest ein Element aus der Gruppe La, Gd und/oder Y und A zumindest ein Aktivator aus der Gruppe Tb, Pr und/oder Eu. Die Werte für a, c und g liegen in den Bereichen 0 ≤ a < 1,0,0 ≤ c ≤ 1,0 und 0< g ≤ 0,2.

Die Verwendung von Thorium als stabilisierendes vierwertiges Dope-Element beruht darauf, dass die Teilsubstitution von Ce³⁺ durch Th⁴⁺ aufgrund der ähnlichen ionenradien (107 bzw. 102 nm) besonders günstig ist. Da jedoch wegen der Radioaktivität von Thorium eine praktische Verwendung ausgeschlossen ist, wurde bereits früher die Substitution auch mit anderen vierwertigen Ionen großen Durchmessers erprobt (z.B. Hafnium (78 pm) oder Zirkon (79 pm). Es wurde jedoch in keinem der Fälle einen stabilisierende Wirkung für den Leuchtstoff LaPO₄:Ce,Tb gefunden.

Überraschenderweise zeigte sich in neuesten Untersuchungen, dass eine Teilsubstitution von Ce³⁺ durch das sehr viel kleinere vierwertige Ge⁴⁺ (53 pm) eine ähnlich stabilisierende Wirkung verursacht wie das große vierwertige Th⁴⁺. Bereits bei einer geringen Dotierung von Ge bezogen auf die Summe der Seltenerd-Ionen kann sowohl eine Steigerung der Quantenausbeute des Leuchtstoff als auch eine deutliche Verbesserung der Temperaturstabilität erreicht werden.

Bei einer im grünen Wellenlängenbereich Strahlung abgebenden Leuchtstoffzusammensetzung vom Typ

(1-g)[((1-c-a)*Ln,c*Ce,a*Tb)PO₄] x g*GeO₂,

also vom Typ (1-g)[((1-c-a)*Ln,c*Ce,a*A)PO₄] x g*GeO₂ mit Terbium Tb als Aktivator A, müssen die Faktoren a, c und g vorteilhaft folgende Werte annehmen, um eine möglichst hohe Quantenausbeute und Verbesserung der Temperaturstabilität zu erreichen:
0,05 ≤ a ≤ 0,9, bevorzugt 0,1 ≤ a ≤ 0,5, insbesondere 0.1 ≤ a ≤ 0,25;
0,05 ≤ c ≤ 0,9, bevorzugt 0,1 ≤ c ≤ 0,5;
0 < g ≤ 0,1, bevorzugt 0 < g ≤ 0,05.

Weiterhin ergab sich, dass durch die teilweise Substitution des Ce durch Ge-Ionen nicht nur bei im sichtbaren Strahlungsbereich Licht abgebenden Leuchtstoffzusammensetzungen eine Verbesserung erreicht werden kann, sondern auch bei im UV-Bereich strahlenden Leuchtstoffzusammensetzungen.

Vorteilhaft weist dabei eine UV-Leuchtstoffzusammensetzung vom Typ
(1-g)[((1-c)*Ln,c*Ce)PO₄] x g*GeO₂ also vom Typ
(1-g)[((1-c-a)*Ln,c*Ce,a*A)PO₄] x g*GeO₂ ohne Aktivator A, also a = 0
die folgenden Werte für die Faktoren c und g auf:
0,01 ≤ c ≤ 1,0, bevorzugt 0,01 ≤ c ≤ 0,5 , insbesondere 0,01 ≤ c ≤ 0,1;
0 < g ≤ 0,1, bevorzugt 0 < g ≤ 0,05

Bei einer erfindungsgemäßen UV-Leuchtstoffzusammensetzung ohne Ce vom Typ
(1-g)[((1-a)*Ln,a*Pr)PO₄] x g*GeO₂ also vom Typ
(1-g)[((1-c-a)*Ln,c*Ce,a*A)PO₄] x g*GeO₂ mit c = 0 und Praseodym Pr als
Aktivator A sollten a und g folgende Werte annehmen:
0,001 ≤ a ≤ 0,1, bevorzugt 0,003 ≤ a ≤ 0,03;
0 < g ≤ 0,1, bevorzugt 0 < g ≤ 0,05

Die angegebenen Konzentrationswerte der Ge-Dotierungen, d.h. die Faktoren g verstehen sich als die Konzentrationen, die sich aus der Einwaage der entsprechenden Germaniumverbindungen, z.B. Germaniumdioxid GeO₂, in die Ansatzmischung errechnen. Dabei ist anzumerken, dass der Anteil an Ge-Ionen, die bei der Glühung tatsächlich in das z. B. Lanthanphosphatgitter eingebaut werden, stark von den jeweiligen Präparationsbedingungen abhängt. Bei den nachfolgend aufgeführten Herstellbedingungen betrug er beispielsweise ca. 10 %.

Untersuchungen der kristallographischen Änderungen, die mit der Teilsubstition von Ce³⁺ durch Ge⁴⁺ einhergehen, beispielsweise mit Hilfe der Aufnahme entsprechender Röntgenstreu-Diagramme, ergaben weiterhin, dass bei den erfindungsgemäßen Leuchtstoffzusammensetzungen mit Ge-Dotierung die relative Höhe des Röntgendiffraktionspeaks der Leuchtstoffzusammensetzung bei 2θ = 31,29° bezogen auf den Hauptpeak bei 2θ = 28,70° weniger als 50 % beträgt. Der Peak der undotierten Probe besitzt demgegenüber bei 2θ = 31,29° eine Höhe von größer 65 % bezogen auf den Hauptpeak.

Die Erfindung ist anhand der nachfolgenden Figuren und Ausführungsbeispiele näher veranschaulicht.

### Kurze Beschreibung der Figuren

- Figur 1: zeigt das Temperaturlöschverhalten von GeO₂-dotierten LaPO₄:Ce,Tb-Leuchtstoffzusammensetzungen im Vergleich zu einer undotierten Referenzprobe
- Figur 2: zeigt die Änderung der relativen Quantenausbeute einer LaPO₄:Ce,Tb-Leuchtstoffzusammensetzung mit zunehmendem Ge-Gehalt von 0 bis 1 Mol-% bezogen auf die Summe der Selterd-Ionen in der Leuchtstoffzusammensetzung
- Figur 3: zeigt die Änderung der relativen Quantenausbeute einer LaPO₄:Ce,Tb-Leuchtstoffzusammensetzung mit zunehmendem Ge-Gehalt von 0 bis 10 Mol-% bezogen auf die Summe der Selterd-lonen in der Leuchtstoffzusammensetzung
- Figur 4a: zeigt das Röntgendiffraktions-Diagramm für eine erfindungsgemäße LaPO₄:Ce,Tb-Leuchtstoffzusammensetzung mit einem Ge-Zusatz von 0,05 Mol-% bezogen auf die Summe der Selterd-Ionen in der Leuchtstoffzusammensetzung.
- Figur 4b: zeigt das Röntgendiffraktions-Diagramm für eine erfindungsgemäße LaPO₄:Ce,Tb-Leuchtstoffzusammensetzung ohne Zusatz von Ge.

### Beschreibung der Messdiagramme

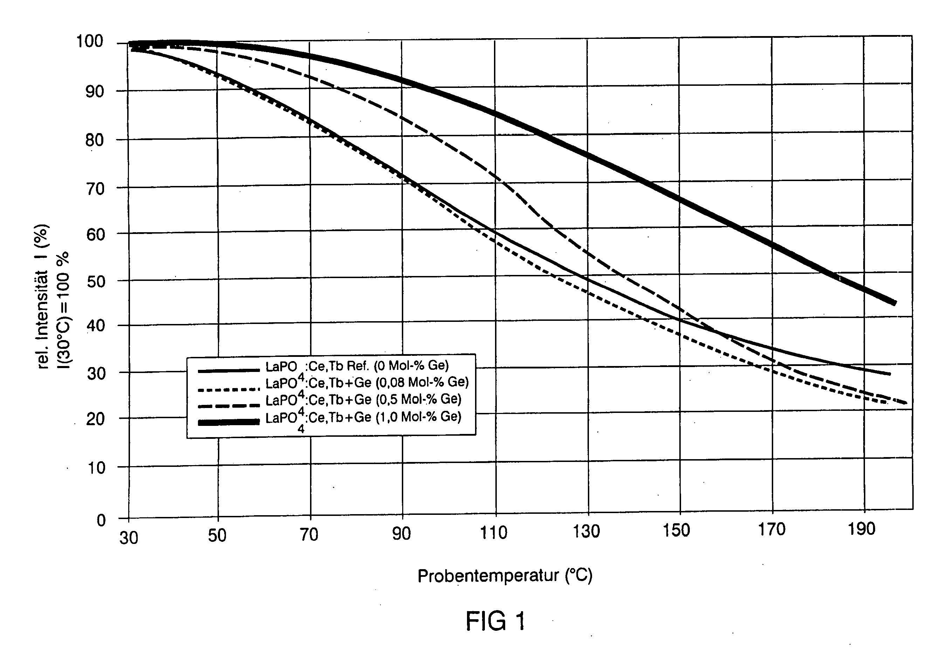

In Figur 1 ist das Temperaturlöschverhalten von GeO₂-dotierten LaPO₄:Ce,Tb-Leuchtstoffzusammensetzungen im Vergleich zu einer undotierten Referenzprobe dargestellt.

Bereits bei einer Dotierung mit 0,5 Mol-% bezogen auf die Summe der Seltenen Erd-Ionen in LaPO₄:Ce,Tb ergibt sich nach einer thermischen Behandlung von 30 Minuten bei 600°C an Luft ein deutlich geringerer temperaturabhängiger Rückgang der Leuchtfähigkeit als bei einem undotierten Vergleichsleuchtstoff. Während die undotierte Referenzpröbe z.B. bei einer Temperatur von 90 °C einen Intensitätsrückgang um mehr als 30 % gegenüber dem Ausgangswert bei Raumtemperatur aufweist, beträgt der Rückgang der mit 0,5 Mol-% Ge dotierten Probe bei dieser Temperatur nur 20 % und bei einer mit 1,0 Mol-% dotierten Probe sogar nur 10 % der Anfangshelligkeit.

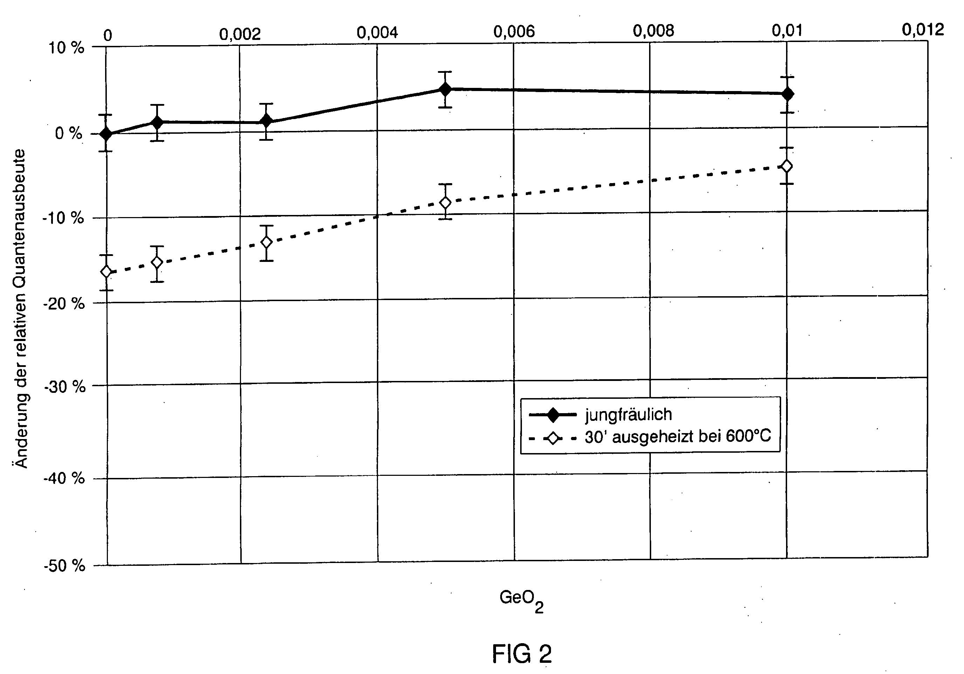

In Figur 2 ist die Änderung der relativen Quantenausbeute einer LaPO₄:Ce,Tb-Leuchtstoffzusammensetzung mit zunehmendem Ge-Gehalt von 0 bis 1 Mol-% bezogen auf die Summe der Selterd-Ionen in der Leuchtstoffzusammensetzung dargestellt.

Mit ansteigendem Zusatz von Germanium von 0,08 Mol-% bis 1,0 Mol-% steigert sich die Quantenausbeute um ca. 5%. Auch nach einer thermischen Behandlung von 30 Minuten bei 600°C an Luft bewirkt die Teilsubstitution eine Stabilisierung der Quantenausbeute: Während sich durch die bei diesem Prozess auftretende oxidative Schädigung die Quantenausbeute des undotierten Leuchtstoffs um etwa 15 % vermindert, beträgt der Quantenausbeuteabfall der mit Ge dotierten Proben, verglichen mit dem jungfräulichen Leuchtstoff vor der thermischen Behandlung, nur 14 % bei 0,08 Mol-% Ge und nur noch 5 % bei 1,0 Mol-% Ge

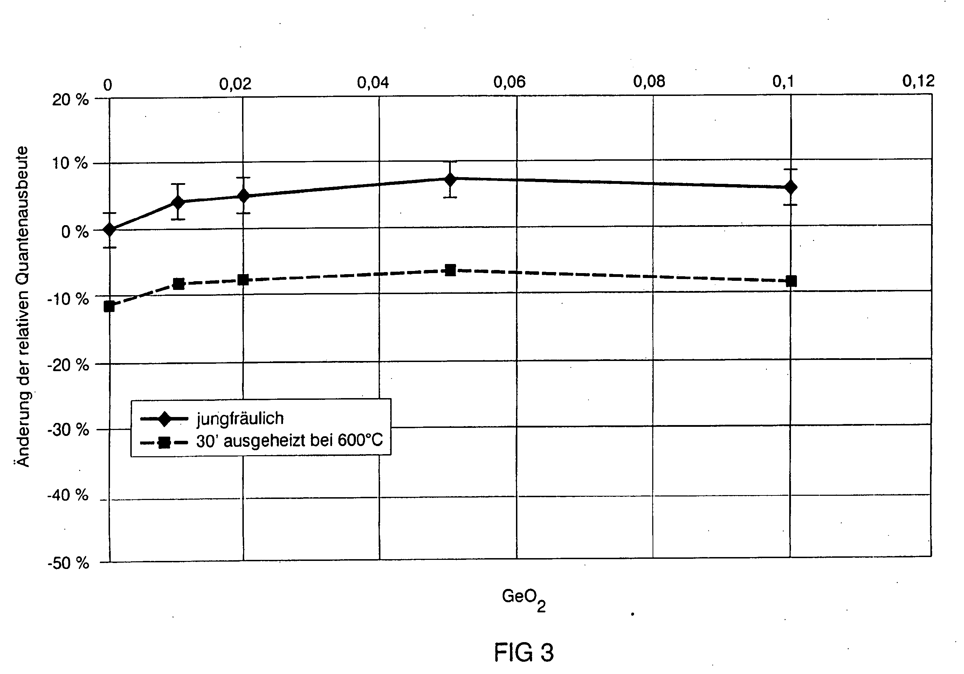

Figur 3 zeigt die Änderung der relativen Quantenausbeute einer LaPO₄:Ce,Tb-Leuchtstoffzusammensetzung mit zunehmendem Ge-Gehalt von 0 bis 10 Mol-% bezogen auf die Summe der Selterd-Ionen in der Leuchtstoffzusammensetzung.

Bei einer Erhöhung der Konzentration für die Teilsubstitution auf bis zu 10 Mol-% Ge ergibt sich bei dem jungfräulichen Leuchtstoff für die Quantenausbeutesteigerung ein flaches Maximum bei ca. 5 Mol-% Ge, während sich bei thermischbehandelten Leuchtstoffen (30 Minuten bei 600 °C) bereits bei etwa 1 Mol-% eine Sättigung der Quantenausbeute einstellt.

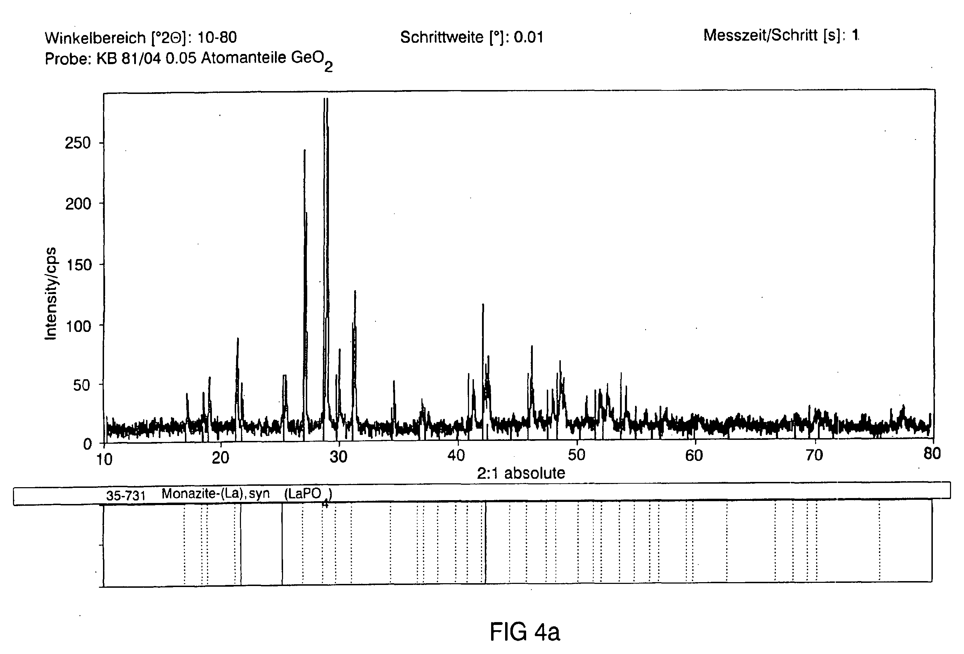

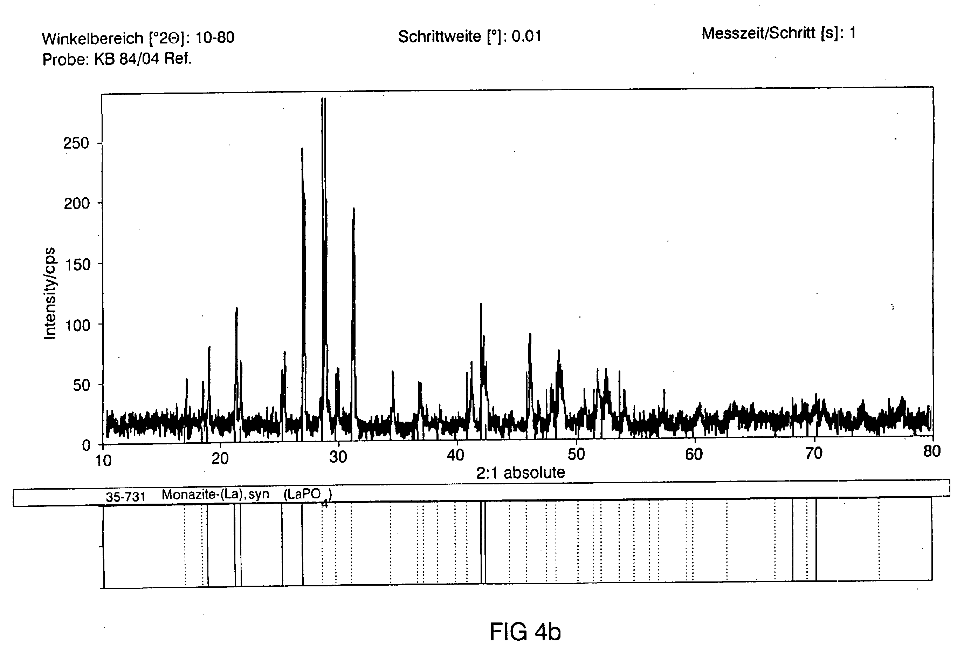

Figuren 4a und b zeigen das Röntgendiffraktions-Diagramm für eine erfindungsgemäße LaPO₄:Ce,Tb-Leuchtstoffzusammensetzung mit einem Ge-Zusatz von 0,05 Mol-% bezogen auf die Summe der Selterd-Ionen in der Leuchtstoffzusammensetzung bzw. ohne Zusatz von Ge.

Untersucht man die kristallographischen Änderungen, die mit der Teilsubstition von Ce³⁺ durch Ge⁴⁺ einhergehen, beispielsweise durch die Aufnahme entsprechender Röntgenstreu-Diagramme, so fällt auf, dass bei Leuchtstoffzusammensetzungen mit Ge-Dotierung die relativen Höhen (bezogen auf den Hauptreflex bei 2θ = 28,70°) der Röntgenpeaks bei einem Winkel von 2θ = 31,29° mit 44 % bis 51 % signifikant kleiner sind als bei undotiertem LaPO₄:Ce,Tb mit einer relativen Höhe von 67 %.

Mit zunehmenden Anteilen von 0 bis 1 Mol-% Ge (bezogen auf die Summe der Selten Erd-Ionen) erhöht sich die Quantenausbeute um bis zu 5 %. Nach einer 30-minütigen Ausheizung bei 600 °C, bei der eine undotierte LaPO₄:Ce,Tb-Probe einen Rückgang der Quantenausbeute um 16 % erleidet, verringert sich bei dotierten Proben die QE-Abnahme mit zunehmendem Ge-Anteil bis 1 Mol-% auf nur noch 5 %.

### Beispiele zur Herstellung der Leuchtstoffzusammensetzungen

### Herstellung eines ersten Ausführungsbeispiels einer erfindungsgemäßen Leuchtstoffzusammensetzung:

Eine Menge von 40 g eines LaPO₄:Ce,Tb-Mischoxids der Zusammensetzung: La_{0,444}Ce_{0,418}Tb_{0,138}PO₄ wird mit einer Menge von 179 mg GeO₂ unter Zugabe einer kleinen Menge von einigen zehntel Prozent eines geeigneten Schmelzmittels (z.B. Borsäure oder Alkalifluorid) in einer Mörsermühle sorgfältig homogenisiert. Nach dem Einfüllen in einen Aluminiumoxid-Tiegel erfolgt eine Glühung (2 Stunden bei 1200°C) in reduzierender Atmosphäre.

Nach dem Erkalten wird der Leuchtstoff aus dem Tiegel befreit und in der Mörsermühle fein vermahlen und anschließend gesiebt. Auf diese Weise wird ein Ge-dotierter Leuchtstoff der Zusammensetzung La_{0,444}Ce_{0,417}Tb_{0,138}PO₄×0.01GeO₂ gebildet.

### Herstellung einer nicht erfindungsgemäßen Leuchtstoffzusammensetzung als Vergleich:

Eine Menge von 40 g eines LaPO₄:Ce,Tb-Mischoxids der Zusammensetzung: La_{0,444}Ce_{0,418}Tb_{0,13}PO₄ wird ohne Zumischung von GeO₂ unter Zugabe einer kleinen Menge von einigen zehntel Prozent eines geeigneten Schmelzmittels (z.B. Borsäure oder Alkalifluorid) in einer Mörsermühle sorgfältig homogenisiert. Nach dem Einfüllen in einen Aluminiumoxid-Tiegel erfolgt eine Glühung (2 Stunden bei 1200°C) in reduzierender Atmosphäre. Nach dem Erkalten wird der Leuchtstoff aus dem Tiegel befreit und in der Mörsermühle fein vermahlen und anschließend gesiebt. Auf diese Weise wird somit ein undotierter Leuchtstoff der Zusammensetzung La_{0,444}Ce_{0,138}Tb_{0,138}PO₄ gebildet.

### Herstellung eines weiteren Ausführungsbeispiels einer erfindungsgemäßen Leuchtstoffzusammensetzung:

Die Herstellung eines weiteren erfindungsgemäßen Leuchtstoffs erfolgt wie im Ausführungsbeispiel 1, jedoch wird der Leuchtstoff anschließend an die Endsiebung in einer verdünnten Monoethanolamin-Lösung gewaschen (mit 1,5 ml Monoethanolamin (MEA) in 1 Liter entionisiertem Wasser 2 Stunden bei Raumtemperatur waschen, überstehende Lösung abdekantieren, mit entionisiertem Wasser nachwaschen, abfiltrieren und trocknen)

Die erfindungsgemäße Leuchtstoffzusammensetzung nach dem Ausführungsbeispiel 1 weist gegenüber dem nicht mit GeO₂-dotierten Leuchtstoff eine um 4 % höhere Quantenausbeute auf. Nach einer thermischen Behandlung 30 Minuten bei 600 °C liegt die Quantenausbeute dieses Leuchtstoffs nur 5 % unter der des ungetemperten Referenzleuchtstoffs und damit um mehr als 10 % über der des auf gleiche Weise getemperten Referenzleuchtstoffs. Bei einer Betriebstemperatur von 90 °C weist der temperaturbehandelte erfindungsgemäße Leuchtstoff nach Ausführungsbeispiel 1 noch einen auf seine Quantenausbeute bei Raumtemperatur bezogenen QE-Wert von mehr als 90 % auf, während der undotierte Referenzleuchtstoff bei dieser Temperatur einen Quantenausbeuteverlust von etwa 30 % erlitten hat.

Die erfindungsgemäße Leuchtstoffzusammensetzung aus dem Ausführungsbeispiel 2 zeigt gegenüber der Referenzleuchtstoffzusammensetzung die gleichen Vorteile wie die erfindungsgemäße Leuchtstoffzusammensetzung nach dem Ausführungsbeispiel 1, weist jedoch gegenüber dem letzteren eine um 2 % höhere Anfangs-Quantenausbeute auf.

Der Fachmann versteht, dass die Erfindung von kleineren Änderungen der Stöchiometrie des Leuchtstoffs unabhängig ist. Der positive Einfluss des Germanium-Zusatzes bleibt auch bei Variationen des Herstellverfahrens wie z.B. Zweifachglühung oder Verwendung anderer Schmelzmittel erhalten. All diese Variationen sind sinngemäß Inhalt dieser Erfindung.

## Patentansprüche

1. Leuchtstoffzusammensetzung für Lampen mit einem Gitter in monokliner Kristallstruktur (Monazit) vom Typ
(1-g)[((1-c-a)*Ln,c*Ce,a*A)PO₄] x g*GeO₂,
wobei Ln zumindest ein Element aus der Gruppe Lanthan La, Gadolinium Gd und/oder Yttrium Y und A zumindest ein Aktivator aus der Gruppe Terbium Tb, Praseodym Pr und/oder Europium Eu ist sowie
0 ≤ a ≤ 1,0
0 ≤ c ≤ 1,0 und
0 < g ≤ 0,2

2. Leuchtstoffzusammensetzung nach Anspruch 1, **dadurch gekennzeichnet, dass** der Aktivator A Terbium Tb ist und
0,05 ≤ a ≤ 0,9, bevorzugt 0,1 ≤ a ≤ 0,5, insbesondere 0,1 ≤ a ≤ 0,25
0,05 ≤ c ≤ 0,9, bevorzugt 0,1 ≤ c ≤ 0,5 und
0 < g ≤ 0,1, bevorzugt 0 < g ≤ 0,05 ist.

3. Leuchtstoffzusammensetzung nach Anspruch 1, **dadurch gekennzeichnet, dass**
a = 0
0,01 ≤ c ≤ 1,0, bevorzugt 0,01 ≤ c ≤ 0,5 , insbesondere 0,01 ≤ c ≤ 0,1
und 0 < g ≤ 0,1, bevorzugt 0 < g ≤ 0,05

4. Leuchtstoffzusammensetzung nach Anspruch 1, **dadurch gekennzeichnet, dass** der Aktivator A Praseodym Pr ist und
c=0
0,001 ≤ a ≤ 0,1, bevorzugt 0,003 ≤ a ≤ 0,03
0 ≤ g ≤ 0,1, bevorzugt 0 < g ≤ 0,05

5. Leuchtstoffzusammensetzung nach einem der Ansprüche 1 bis 4, **dadurch gekennzeichnet**, die relative Höhe des Röntgendiffraktionspeaks der Leuchtstoffzusammensetzung bei 2θ = 31,29° bezogen auf den Hauptpeak bei 2θ = 28,70° weniger als 50 % beträgt.

## Claims

1. Phosphor composition for lamps with a lattice of monoclinic crystal structure (monazite) of type
(1-g) [((1-c-a) *Ln, c*Ce, a*A) PO₄]×g*GeO₂,
in which Ln is at least one element selected from the group consisting of lanthanum La, gadolinium Gd and/or yttrium Y and A is at least one activator selected from the group consisting of terbium Tb, praseodymium Pr and/or europium Eu, and
0 ≤ a ≤ 1.0
0 ≤ c ≤ 1.0, and
0 < g ≤ 0.2.

2. Phosphor composition according to Claim 1, **characterized in that** the activator A is terbium Tb, and
0.05 ≤ a ≤ 0.9, preferably 0.1 ≤ a ≤ 0.5, in particular 0.1 ≤ a ≤ 0.25
0.05 ≤ c ≤ 0.9, preferably 0.1 ≤ c ≤ 0.5, and
0 < g ≤ 0.1 preferably 0 < g ≤ 0.05.

3. Phosphor composition according to Claim 1, **characterized in that**,
a = 0
0.01 ≤ c ≤ 1.0, preferably 0.01 ≤ c ≤ 0.5, in particular 0.01 ≤ c ≤ 0.1
and 0 < g ≤ 0.1, preferably 0 < g ≤ 0.05.

4. Phosphor composition according to Claim 1, **characterized in that** the activator A is praseodymium Pr and
c = 0
0.001 ≤ a ≤ 0.1, preferably 0.003 ≤ a ≤ 0.03
0 ≤ g ≤ 0.1, preferably 0 < g ≤ 0.05.

5. Phosphor composition according to one of Claims 1 to 4, **characterized in that** the relative height of the X-ray diffraction peak of the phosphor composition at 2θ = 31.29° amounts to less than 50% with respect to the main peak at 2θ = 28.70°.

## Revendications

1. Composition de substance luminescente pour des lampes ayant un réseau en structure cristalline monoclinique (monazite) du type
(1-g) [((1-c-a)*Ln, c*Ce,a*A) PQ_{4]} x g*GeO₂,
dans laquelle Ln est au moins un élément choisi dans le groupe du lanthane, La, du gadolinium, Gd et/ou de l'yttrium Y et A est au moins un activateur du groupe du terbium Tb, du praséodyme Pr et/ou de l'europium Eu, ainsi que
0 ≤ a ≤1,0
0 ≤ c ≤ 1,0 et
0 < g ≤ 0,2

2. Composition de substance luminescente suivant la revendication 1, **caractérisée en ce que** l'activateur A est du Terbium Tb et
0,05 ≤ a ≤ 0,9, de préférence 0,1 ≤ a ≤ 0,5, notamment 0,1 ≤ a ≤ 0,25
0,05 ≤ c ≤ 0,9, de préférence 0,1 ≤ c ≤ 0,5 et
0 < g ≤ 0,1, de préférence 0<g≤0,05.

3. Composition de substance luminescente suivant la revendication 1, **caractérisée en ce que**
a = 0
0,01 ≤ c ≤ 1,0, de préférence 0,01 ≤ c ≤ 0,5, notamment 0,01 ≤ c ≤ 0,1 et
0 < g ≤ 0,1, de préférence 0 < g ≤ 0,05.

4. Composition de substance luminescente suivant la revendication 1, **caractérisée en ce que** l'activateur A est le praséodyme Pr et
c = 0
0,001 ≤ a ≤ 0,1, de préférence 0,003 ≤ a ≤ 0,03
0 ≤ g ≤ 0,1, de préférence 0 < g ≤ 0,05.

5. Composition de substance luminescente suivant l'une des revendications 1 à 4, **caractérisée en ce que** la hauteur relative des pics de diffraction des rayons X de la composition de substance luminescente pour 2θ = 31,29° est inférieure à 50 % rapporté au pic principal pour 2θ = 28,70°.
